# EUROPEAN PATENT APPLICATION

(11) **EP 4 364 574 A1**
(43) Date of publication of application: **08.05.2024**
(21) Application number: 22425053.0
(22) Date of filing: 07.11.2022
(51) Int. Cl.: A22C 11/00, A22C 15/00

(54) **IMPROVED SYSTEM FOR HANDLING FOOD PRODUCTS, SUCH AS SAUSAGES**

(71) Applicant: ElettroSolution S.r.l., 25038 Rovato (BS) (IT)
(72) Inventor: BERTELLI, Marcello, I-25035 Ospitaletto (BS) (IT)
(74) Representative: Botti & Ferrari S.p.A.

(57) **Abstract**

A system (1) for handling food products, such as cured meats, is herein disclosed, the system comprising a control unit (C) adapted to automatically control the system (1), a movement element (2) comprising a plurality of hooking elements (2g) configured to support and transport one or more respective food products (A), wherein each of said hooking elements (2g) is movable by means of an own motor, which is controllable independently of the motors of the other hooking elements (2g), said movement element (2) being configured to receive the food products (A), which are fed with a given feeding rate (Clock), on the hooking elements (2g), and at least one automatic manipulation element (4) configured to pick up a food product or a group of food products (A) from the respective hooking element (2g), said automatic manipulation element (4) being controllable by means of own motorized means. Suitably, the control unit (C) is configured to move the hooking elements (2g) both according to the feeding rate (Clock) and independently of said feeding rate (Clock), forming at least one group of hooking elements (2g) with given relative spacing and speed features, and said control unit (C) is further configured to relate and synchronize the operation of the motor of each hooking element (2g) with the operation of the motorized means of the automatic manipulation element (4), so as to synchronously control the movement element (2) and the automatic manipulation element (4) for picking up the food products (A).

## Description

### Field of application

The present invention relates to a system for handling food products, in particular for hanging on proper supports, and subsequently picking up, cured meats such as sausages, hot dogs, frankfurters, chorizo, and the like. The following description is made with reference to this application field with the only purpose of simplifying the exposition thereof.

### Prior art

As it is known, there are apparatuses, called sausage filler machines, which allow the production of sausages, hot dogs, and similar food products, which are extruded by said apparatuses and portioned according to a predefined rate. Generally, the food product already portioned is hung on hooks of a hanging unit arranged downstream of the sausage filler machine and that provides for moving the products hung thereon.

However, it is noted that, in the hanging units generally used, the distance between a hook and another is fixed, and it is possible to only adjust the speed of the assembly of hooks as a whole, in particular based on the rate with which the food product is extruded, without any degree of freedom for the operator.

Moreover, the operation of picking up the hung products is generally performed manually by the operators, who pick up the single food products hung on the respective hooks, for instance by arranging them on suitable collection rods so as to form groups of food products.

The known solutions thus have many drawbacks, mainly due to the fact that the movement by means of the hanging units does not allow picking up and grouping the hung products by means of automatic units, the presence of the operators thus being always necessary, with a consequent increase in costs and possibility of errors.

The technical problem of the present invention is to provide a system having structural and functional features so as to allow overcoming the limitations and drawbacks of the known solutions, in particular that is able to perform the hanging, the movement and the subsequent picking up of the food products automatically and efficiently.

### Summary of the invention

The solution idea underlying the present invention is to use a smart transport system (herein referred to as "movement element") comprising a plurality of movable hooks, which may be controlled and moved independently of each other, so as to switch from a movement thereof based on the feeding rate of the products (i.e., when the extruded product is arranged on the hook) to a movement thereof in groups which are definable as desired based on the needs and/or circumstances, wherein the hooks are grouped and moved for the subsequent picking up of the food products hung thereon. At least one robot is then used (herein referred to as "automatic manipulation element"), whose movement is suitably synchronized with the movement of the motor of each of the hooks of the movement element for picking up and subsequently handling the food products suitably grouped.

Based on this solution idea, the above technical problem is solved by a system for handling food products, such as cured meats, comprising a control unit adapted to automatically control the system, a movement element comprising a plurality of hooking elements configured to support and transport one or more respective food products, wherein each of said hooking elements is movable by means of an own motor, which is controllable independently of the motors of the other hooking elements, said movement element being configured to receive the food products, which are fed with a given feeding rate, on said hooking elements, and at least one automatic manipulation element configured to pick up a food product or a group di food products from the respective hooking element, said automatic manipulation element being controllable by means of own motorized means, wherein the control unit is configured to move the hooking elements both according to the feeding rate and independently of the feeding rate, forming at least one group of said hooking elements with given relative spacing and speed features (said hooking elements being thus grouped based on said parameters, which are selectable based on the specific situation), and wherein the control unit is further configured to relate and synchronize the operation of the motor of each hooking element with the operation of the motorized means of the automatic manipulation element, so as to synchronously control the movement element and the automatic manipulation element for picking up the food products.

More particularly, the invention comprises the following additional features, taken individually or in combination if required.

According to an aspect of the present invention, the control unit may comprise instructions which, when executed, cause the system to perform the following steps:
- an accumulation step in which the hooking elements are moved according to the feeding rate and receive the food product thereon, thereby forming a group of hooking elements (which possibly may be temporarily stopped, but still grouped);
- once a prefixed number of hooking elements has been reached in said group of hooking elements, a movement step of said group independently of the feeding rate; and
- a picking up step in which the automatic manipulation element acts on the group of hooking elements for picking up the food products transported by them.

In an embodiment, the control unit is configured to create different groups of hooking elements, said groups being moved independently of each other.

According to an aspect of the present invention, the control unit may be configured to move simultaneously some of the hooking elements according to the feeding rate and other hooking elements independently of the feeding rate.

According to an aspect of the present invention, the automatic manipulation element may be a six-axis robot.

According to an aspect of the present invention, the movement element may be adapted to interface with a sausage filler machine which the food products to hang on the hooking elements come from.

According to an aspect of the present invention, the system may further comprise a plurality of support elements configured to pick up and support the food products moved by the movement element and possibly grouped in a group, wherein the automatic manipulation element is configured to pick up said food products by means of one or more of said support elements.

According to an aspect of the present invention, the support elements may be in the form of rods configured to allow, under the action of the automatic manipulation element, picking up the food products from the hooking elements and supporting the same.

According to an aspect of the present invention, the system may comprise a warehouse adapted to contain a plurality of said support elements, the automatic manipulation element being configured to pick up from the warehouse one or more of said support elements before acting at the hooking elements.

According to an aspect of the present invention, the system may also comprise a storage area of the support elements whereon the food products are arranged, the automatic manipulation element being configured to transport the support element whereon the food products are arranged towards the storage area.

According to an aspect of the present invention, the hooking elements may be hooks shaped so as to receive the food products.

According to an aspect of the present invention, the motors of the hooking elements may be brushless motors.

According to an aspect of the present invention, the movement element may comprise a body with a rail for the sliding of the hooking elements, said rail forming a closed path along which the hooking elements move.

According to an aspect of the present invention, the system may also comprise a weighing station associated with the automatic manipulation element and configured to detect the weight of the food products picked up by it.

According to an aspect of the present invention, the food products handled by the system may be extruded sausages.

The features and advantages of the system of the invention will become apparent from the following description of an embodiment thereof, given by way of indicative and non-limiting example with reference to the accompanying drawings.

### Brief description of the drawings

In those drawings:
- figure 1 shows a general scheme of a system according to the present invention; and
- figure 2 shows the system according to an embodiment of the present invention.

### Detailed description

With reference to those figures, a system for handling food products according to the present invention is globally and schematically indicated with reference number 1.

It is worth noting that the figures represent schematic views and are not drawn to scale, but instead they are drawn so as to emphasize the important features of the invention. Moreover, in the figures, the different elements are depicted in a schematic manner, and their shape may vary depending on the application desired. It is also noted that in the figures the same reference numbers refer to elements that are identical in shape or function. Finally, particular features described in relation to an embodiment illustrated in a figure are also applicable to the other embodiments illustrated in the other figures.

Moreover, it is noted that, when process step sequences are illustrated, not necessarily do they follow the indicated sequence, and said steps may be, in some cases, inverted.

The system 1 of the present invention is preferably used for handling food products (indicated with reference A), for instance for handling cured meats such as sausages, hot dogs, frankfurters, chorizo, and the like. By way of non-limiting example, the apparatus 1 may be used for hanging and subsequently picking up extruded sausages from a pre-existing sausage filler machine. However, it is noted that the system 1 may also be used with other types of products and other types of machines, and the examples reported in the following description are only illustrative and do not limit the scope of the present invention. For instance, it can be stated that the system 1 of the present invention is adapted to handle essentially cylindrical-shaped food products, without being limited by the type of food product or production machine.

In order to allow the operations herein below described to be carried out, the system 1 comprises a control unit (identified with reference C), including proper memory units MEM and suitably programmed and arranged to the manage and automatic control it. The control unit C may be for instance a computerized unit integrated in the system 1. Moreover, it is noted that the control unit C may be a single unit or may comprise a plurality of local and/or remote units, possibly communicating with each other and each arranged to carry out specific operations. The control unit C is thus able to control the system 1 to obtain the desired functions. In any case, the present invention is not limited in any way by the architecture used for the control unit C, which in general may be any suitable computerized unit, comprising one or more units based on the needs and/or circumstances.

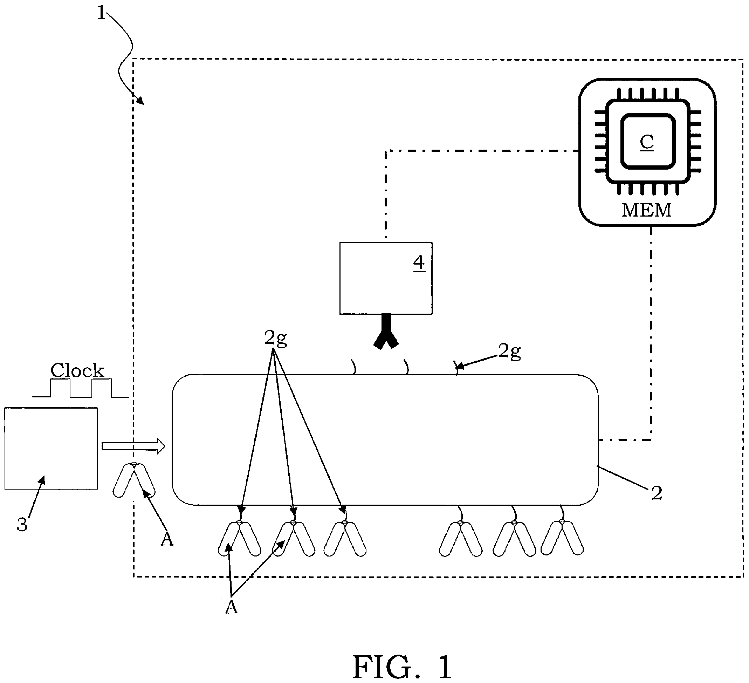

As illustrated in figure 1, first of all the system 1 comprises a smart transport system, which is herein referred to as "movement element" and represented with reference number 2. The movement element 2 comprises a plurality of hooking elements 2g configured to support and transport one or more respective food products A.

As previously mentioned, the movement element 2 is adapted to interface with a sausage filler machine (indicated with reference 3) from which the food products A to hang on the hooking elements 2g come from. The sausage filler machine 3 may be for instance a machine already present at the user and is characterized by a given timing or frequency (herein indicated as "feeding rate" and represented with the reference "Clock") with which the products, such as for instance sausages, are extruded. The movement element 2 is thus configured to receive the food products A on said hooking elements 2g, said food products being fed based on the aforementioned feeding rate Clock.

Advantageously, in order to handle the extruded food products A at best, each hooking element 2g is movable by means of an own motor 2m, which is controllable independently of the motors of the other hooking elements; in this way, it is no longer necessary to move all of the hooking elements simultaneously and in the same way, as it occurs in the known solutions, but through the control unit C it is possible to move the single hooking elements 2g independently, thereby obtaining a great flexibility of the system 1, as it will be detailed herein after.

In an embodiment of the present invention, the hooking elements 2g are in the form of hooks shaped so as to receive the food products. By way of example, it is possible to hang a food product A on the abovementioned hooks by means of a proper noose formed on said food product A, or it is possible to hang a chain of food products connected to each other, such as for instance a pair of sausages (or more generally chains of sausages) connected to each other at a division point, which is the hanging point on the hooks.

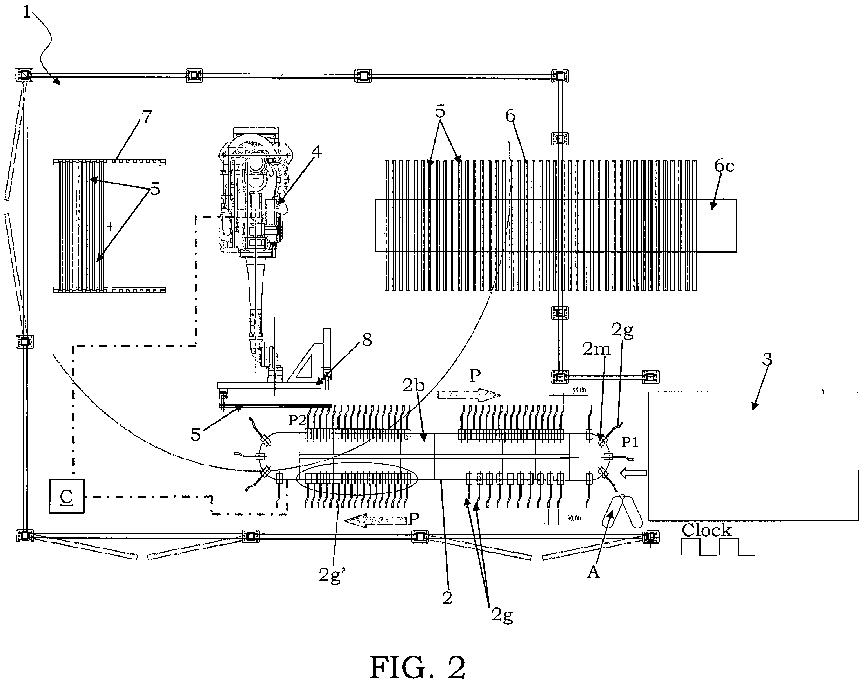

In an embodiment, as shown in figure 2, the aforementioned hooking elements 2g may be arranged in parallel to each other and the movement element 2 may comprise a body 2b with a rail for the sliding of said hooking elements 2g, said rail forming a closed path P along which they move. The closed path P extends substantially horizontally, i.e. parallel to the ground whereon the movement element 2 rests. Along this closed path P, the food products, thanks to the movable hooking elements 2g, pass from an initial position P1 (or feeding position) to a picking up position P2, where they are picked up for instance by a suitable rod, as it will be described herein after.

Moreover, in an embodiment of the present invention, the motors of the hooking elements 2g are brushless motors, with all the advantages of this technology. These motors in fact are controllable individually through the control unit C as above illustrated. In particular, as it is known, a brushless motor works in direct current and has a rotor without windings and provided with permanent magnets, that is why an electronic circuit and a microcontroller, suitably controlled by the control unit C of the system 1, are used to cause the rotation of the magnetic field generated in the stator.

Suitably according to the present invention, the system 1 also comprises one or more robots for picking up the food products A from the hooks and the subsequent manipulation and handling thereof; in the present description, the aforementioned robot is called "automatic manipulation element" and is identified with the reference number 4. This automatic manipulation element 4 is thus configured to pick up a food product or, preferably, a group of food products A from the respective hooking element/s 2g and is controllable by means of own motorized means.

It should be noted that the present invention is not limited by the architecture of the automatic manipulation element 4, which may vary based on the needs and/or circumstances; also the motorized means which cause the movement of said automatic manipulation element 4 are not limited either in number or typology. It is also noted that, though figure 2 shows a single automatic manipulation element 4, any suitable number may be used (for instance two automatic manipulation elements may be present, which work with synchronized steps and timings).

In an embodiment, the automatic manipulation element 4 is a six-axis robot and thus, thanks to the six freedom degrees thereof, is able to substantially reproduce all of the movements of a human arm.

As above mentioned, advantageously according to the present invention, the control unit C is configured to move the hooking elements 2g both according to the feeding rate Clock and independently of said feeding rate Clock, and is programmed to form groups of hooking elements 2g, which in this way are grouped with each other based on given spacing features between the various hooks and speed features. In this way, it is possible to pass from a fixed pitch, i.e. from a movement that follows the aforementioned feeding rate Clock, to a greater freedom in managing the hooking elements 2g, with the possibility of forming various groups for the subsequent picking up and the subsequent handling of the food products A hung thereon.

In order to automate the entire system 1 and the process carried out thereby, the control unit C is further configured to relate and synchronize the operation of the motor 2m of each hooking element 2g with the actuation and operation of the motorized means of the automatic manipulation element 4, so as to synchronously control the movement element 2 and the automatic manipulation element 4 for picking up the products A, which are suitably grouped as above indicated. In other words, the motorized system that generates the kinematic of the picking up robot is matched with the single motors of the hooks.

In this way, the automatic manipulation element 4 is suitably synchronized with the single hooking elements 2g, so as to interact with them (which are individually controlled) efficiently and innovatively. In particular, the independent management of the single hooks allows using the automatic manipulation element 4 for picking up the same, which would not be possible with the known solutions.

The automatic manipulation element 4 picks up the food products A (which have been grouped by the smart transport system 2) by means of suitable support elements (indicated with the reference number 5) manipulated by them. In other words, the system 1 also comprises a plurality of support elements 5 configured to pick up and support the food products A moved by the movement element 2 and grouped; the automatic manipulation element 4 is thus configured to pick up the food products A by means of one or more of said support elements 5.

In an embodiment, the support elements 5 are in the form of rods configured to allow, due the action of the automatic manipulation element 4, picking up the food products A from the hooking elements 2g and supporting the same. For instance, said rods may be shaped so as to be introduced into suitable nooses formed on the food product A, or in any other suitable mode, as above illustrated.

It is noted that the present invention is not limited by the shape of the support elements 5, which may vary based on the needs and/or circumstances. For instance, in other embodiments, the support elements 5 may be suitable trays for supporting and transporting the food products A, or any other suitable support.

As indicated in the example of figure 2, the system 1 may also comprise a warehouse 6 adapted to contain a plurality of said support elements 5. In this way, the automatic manipulation element 4 is configured to pick up the support elements 5 from said warehouse 6 prior to act on the hooking elements 2g.

In an embodiment, the warehouse 6 is extended horizontally, i.e. the support elements are arranged in series along an axis that is parallel (or any way not orthogonal) to the ground whereon the components of the system 1 rest, and possibly there is a conveyor 6c of this warehouse 6, such as for instance a trolley on which the support elements 5 are arranged for transporting the same.

Moreover, the system 1 may also comprise a storage area 7 of the support elements 5 after the food products A have been picked up by the hooks. The automatic manipulation element 4 may thus be configured to transport the support element 5 whereon the food products A are arranged towards said storage area 7. The automatic manipulation element 4 is thus movable between the warehouse 6 and the storage area 7 and, obviously, the movement element 2. Even in this case, suitable transport means (such as for instance a trolley) may be present to transport and subsequently handle the food products A on the rods.

In any case it is noted that the present invention is not limited by the configuration of the warehouse 6 and of the storage area 7 and any other suitable configuration is not excluded.

In an example implementation mode, by following suitable instructions of a program stored in the memory unit MEM, the system 1 is able to carry out the following steps for the smart handling of the food products

A coming from the sausage filler machine 3:
- a first accumulation step, in which the hooking elements 2g are moved according to the feeding rate Clock and receive thereon the food product A coming from the sausage filler machine 6; in this step, the hooking elements 2g are moved individually and pass at the sausage filler machine 3 from which they receive the food product A, and this operation is carried out for a preset number of hooking elements, thereby forming a group (indicated with reference 2g') of said hooking elements. The Clock of the sausage filler machine 3 is thus used to handle this first step;
- once a preset number of hooking elements 2g has been reached in the aforementioned group 2g' (for instance twelve hooks, or in general any suitable number), then there is a movement step of said group 2g', even independently of the feeding rate Clock, towards the picking up area. In other words, once a group 2g' has been formed, it may be moved in a flexible manner and independently of the feeding rate Clock, for instance with a certain speed and relative spacing, toward the picking up area; and
- finally there is a picking up step in which the automatic manipulation element 4 acts on the group 2g' of hooking elements for picking up the food products A transported by them, for instance through the aforementioned rods 5. In any case it should be noted that the present invention is not limited by the particular picking up mode implemented, as well as by the picking up position, which for instance may be at a curve of the path P, or along a rectilinear section, and so on.

Suitably, the control unit C is configured to create different groups of hooking elements, said groups being moved independently of each other. Even the number of groups and their picking up position is easily variable, simply by changing the control parameters of the control unit C.

As above mentioned, the control unit C is thus configured to move some of said hooking elements according to the feeding rate Clock and others of said hooking elements independently of said feeding rate Clock, said movements being simultaneous.

In this way, suitably according to the present invention, it is possible to group as desired the hooks which are initially constrained to the Clock of the sausage filler machine 3, thus forming for instance several groups of hooks, with a dynamic and flexible handling of the entire process.

The aforementioned instructions are each time fitted to the sausage filler machine 3 with which the system 1 interfaces and interacts, and thus features such as pitch, spacing of the hooks and the number thereof in a group may vary based on the particular application.

Finally, in an embodiment, the system 1 may further comprise a weighing station 8 associated with the automatic manipulation element 4 and configured to detect the weight of the food products A picked up by it. For instance, the weighing system 8 may be arranged at the foot of the automatic manipulation element 4.

In conclusion, the present invention thus allows overcoming the technical problem, by providing the above system and solving all of the drawbacks of the prior art.

Advantageously according to the present invention, the control of the single motors allows the effective integration of the smart transport system, and thus of the hooks thereof, with the picking up and manipulation robot, which would not be possible by using a traditional transport system.

To sum up, the food products, such as for instance sausages extruded from a sausage filler machine, are thus handled in a very effective and innovative manner, precisely thanks to the innovative combination of the picking up robot with the aforementioned smart transport system, wherein the distance between the hooks, their speed, the number of hooks in a group, and similar parameters are handled in a dynamic manner and not constrained to the Clock of the sausage filler machine. The picking up robot acts on the same Cartesian plane of the smart transport system, which can be adapted to the various circumstances, and there is the grouping of the single hooks for the picking up step. While said hooks are moving in group, the robot provides for picking up the products through the support elements, and then it provides for their storage.

According to the present invention, it is thus possible to pass from an operation linked to the feeding rate of the sausage filler machine (or in general of any food production machine that interfaces with the system) to a dynamic handling, handled by the central control unit, wherein groups of hooks having features that vary based on the specific application may be formed.

Therefore, an effective and completely automated system is obtained, which is handled dynamically and in an easily scalable manner for various applications.

Obviously, a person skilled in the art, in order to meet particular needs and specifications, can carry out several changes and modifications to the system described above, all included in the protection scope of the invention as defined by the following claims.

## Claims

1. A system (1) for handling food products, such as cured meats, comprising:
- a control unit (C) adapted to automatically control the system (1);
- a movement element (2) comprising a plurality of hooking elements (2g) configured to support and transport one or more respective food products (A), wherein each of said hooking elements (2g) is movable by means of an own motor, which is controllable independently of the motors of the other hooking elements (2g), said movement element (2) being configured to receive the food products (A), which are fed with a given feeding rate (Clock), on said hooking elements (2g); and
- at least one automatic manipulation element (4) configured to pick up a food product or a group of food products (A) from the respective hooking element (2g), said automatic manipulation element (4) being controllable by means of own motorized means,
wherein the control unit (C) is configured to move the hooking elements (2g) both according to the feeding rate (Clock) and independently of said feeding rate (Clock), forming at least one group of said hooking elements (2g) with given relative spacing and speed features, and wherein said control unit (C) is further configured to relate and synchronize the operation of the motor of each hooking element (2g) with the operation of the motorized means of the automatic manipulation element (4), so as to synchronously control the movement element (2) and the automatic manipulation element (4) for picking up the food products (A).

2. The system (1) according to claim 1, wherein the control unit (C) comprises instructions which, when executed, cause said system (1) to carry out the following steps:
- an accumulation step in which the hooking elements (2g) are moved according to the feeding rate (Clock) and receive the food product (A) thereon, thereby forming a group (2g') of hooking elements;
- once a preset number of hooking elements (2g) has been reached in said group (2g') of hooking elements, a movement step of said group (2g') independently of the feeding rate (Clock); and
- a picking up step in which the automatic manipulation element (4) acts on the group (2g') of hooking elements for picking up the food products (A) transported by them,
wherein the control unit (C) is configured to create different groups of said hooking elements (2g), said groups being moved independently of each other.

3. The system (1) according to claim 1 or 2, wherein the control unit (C) is configured to move simultaneously some of said hooking elements (2g) according to the feeding rate (Clock) and others of said hooking elements (2g) independently of said feeding rate (Clock).

4. The system (1) according to any one of the preceding claims, wherein the automatic manipulation element (4) is a six-axis robot.

5. The system (1) according to any one of the preceding claims, wherein the movement element (2) is adapted to interface with a sausage filler machine (3) which the food products (A) to hang on the hooking elements (2g) come from.

6. The system (1) according to any one of the preceding claims, further comprising a plurality of support elements (5) configured to pick up and support the food products (A) that are moved by the movement element (2) and grouped into a group, wherein the automatic manipulation element (4) is configured to pick up said food products (A) by means of one or more of said support elements (5).

7. The system (1) according to claim 6, wherein the support elements (5) are in the form of rods configured to allow, due the action of the automatic manipulation element (4), picking up the food products (A) from the hooking elements (2g) and supporting the same.

8. The system (1) according to claim 6 or 7, comprising a warehouse (6) adapted to contain a plurality of said support elements (5), the automatic manipulation element (4) being configured to pick up one or more of said support elements (5) from said warehouse (6) before acting at the hooking elements (2g).

9. The system (1) according to any one of claims 6 to 8, comprising a storage area (7) of the support elements (5) whereon the food products (A) are arranged, the automatic manipulation element (4) being configured to transport the support element (5) whereon the food products (A) are arranged towards said storage area (7).

10. The system (1) according to any one of the preceding claims, wherein the hooking elements (2g) are hooks shaped to receive the food products (A).

11. The system (1) according to any one of the preceding claims, wherein the motors of the hooking elements (2g) are brushless motors.

12. The system (1) according to any one of the preceding claims, wherein the movement element (2) comprises a body (2b) with a rail for the sliding of the hooking elements (2g), said rail forming a closed path (P) along which said hooking elements (2g) move.

13. The system (1) according to any one of the preceding claims, further comprising a weighing station (8) associated with the automatic manipulation element (4) and configured to detect the weight of the food products (A) picked up by it.

14. The system (1) according to any one of the preceding claims, wherein the food products (A) handled by said system (1) are extruded sausages.
